# EUROPEAN PATENT APPLICATION

(11) **EP 4 749 431 A1**
(43) Date of publication of application: **27.05.2026**
(21) Application number: 25218573.1
(22) Date of filing: 26.11.2025
(51) Int. Cl.: G06F 8/30, G06F 11/3668, G06N 20/00

(54) **STRUCTURED PROMPT FRAMEWORK FOR MACHINE LEARNING MODEL OUPUT GENERATION**

(30) Priority: 26.11.2024 US 202418960567
(71) Applicant: Intuit Inc., Mountain View, CA 94043 (US)
(72) Inventor: MUTHU, Malathy, Mountain View, 94043 (US)
(74) Representative: D Young & Co LLP

(57) **Abstract**

Aspects of the present disclosure relate to structuring prompt frameworks in machine learning models. Embodiments include instructing a machine learning model via a prompt to generate an output according to a series of steps that reference one or more sections of the prompt. Embodiments include providing the machine learning model, via the prompt, with the one or more sections delineated with corresponding tags, each section of the one or more sections being referenced in the prompt via a corresponding tag. Embodiments include providing the machine learning model, via the prompt, with an output template indicating a target structure for the output and instructing the machine learning model to score the generated output according to a set of scoring criteria. Embodiments include instructing the machine learning model via the prompt to provide the output only when a calculated score, based on the scoring of the generated output, exceeds a threshold value.

## Description

### INTRODUCTION

Aspects of the present disclosure relate to techniques for structuring prompt frameworks in language processing machine learning models. In particular, techniques described herein involve using a series of sections, delineated with corresponding tags and contained in a prompt provided to a machine learning model, to ensure consistent and accurate outputs generated by the machine learning model.

### BACKGROUND

Every year, millions of people, businesses, and organizations around the world use software applications to assist with countless aspects of life. The use of machine learning models, including language processing machine learning models, in software applications has become widespread. Because of this, both the amount of input queries and the complexity of input queries provided to, for example, a language processing machine learning model have greatly increased. This increase has often led to inaccurate and/or inconsistent outputs generated by the language processing machine learning model. Inaccurate and/or inconsistent outputs may result in providing a user with erroneous results in response to a given input, which may also require the user to run the model again to re-process the input. Such inefficiency may result in significant computational costs and energy consumption associated with language processing machine learning models.

Furthermore, existing techniques may require manual crafting of certain prompts and/or templates provided to a language processing machine learning model as well as manual review of the generated outputs. Other techniques are inflexible and limited to specific applications.

### SUMMARY

Particular aspects are set out in the appended independent claims. Various optional embodiments are set out in the dependent claims.

The present teachings relate at least in part to improved techniques for generating reliable and accurate outputs using language processing machine learning models.

Certain embodiments provide a method of structuring prompt frameworks in language processing machine learning models. The method generally includes: instructing a machine learning model via a prompt to generate an output according to a series of steps that reference one or more sections of the prompt; providing the machine learning model, via the prompt, with the one or more sections, wherein each section of the one or more sections is delineated with a corresponding tag, and wherein each section of the one or more sections is referenced in the prompt via the corresponding tag of the section; providing the machine learning model, via the prompt, with an output template indicating a target structure for the output; instructing the machine learning model via the prompt to score the generated output according to a set of scoring criteria; and instructing the machine learning model via the prompt to provide the output only when a calculated score, based on the scoring of the generated output, exceeds a threshold value.

Other embodiments provide processing systems configured to perform the aforementioned method as well as those described herein; computer-readable media comprising instructions that, when executed by one or more processors of a processing system, cause the processing system to perform the aforementioned methods as well as those described herein; a computer program product embodied on a computer readable medium comprising code for performing the aforementioned methods as well as those further described herein; and a processing system comprising means for performing the aforementioned methods as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example of workflow related to structuring prompt frameworks in language processing machine learning models.
**FIG. 2** is a block diagram illustrating an example related to structuring prompt frameworks in language processing machine learning models.
**FIG. 3** depicts example operations related to structuring prompt frameworks in language processing machine learning models.
**FIG. 4** depicts an example of a processing system for structuring prompt frameworks in language processing machine learning models.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for structuring prompt frameworks in language processing machine learning models.

A machine learning model, such as a language processing machine learning model, may be instructed, via a prompt, to generate an output according to a series of steps that reference one or more sections of the prompt. For example, the language processing machine learning model may be a large language model capable of processing natural language inputs and generating natural language outputs. Each of the one or more sections may include additional details of at least one step in the series of steps by which the machine learning model generates the output. The output may, for instance, comprise one or more unit tests related to a software application (e.g., for automated application testing).

The machine learning model may then be provided, via the prompt, with the one or more sections, each section being delineated with a corresponding tag and being referenced in the prompt via that corresponding tag. In order to systematically spell out the task to be performed by the model, the sections may correspond to different levels of generality, such as getting more specific or more generic with each section. For example, a first section may include a set of instructions associated with a higher level of generality than a level of generality associated with a second section, and the second section may include a reference to the first section. A third section may, for instance, include an output template, contextual information related to generating the output, and/or a set of inputs to be provided to the model. The set of inputs may, for example, correspond to data of a software application. A fourth section may specify the series of steps and further reference the first section, the second section, and the third section (e.g., via corresponding tags). Thus, through such a series of sections, the prompt may provide the model with a structured framework with multiple levels of detail being relationally associated with one another so that the model may be guided in a more optimal manner as it performs its task.

The machine leaning model may be provided, via the prompt, with the output template that indicates a target structure for the output, thereby guiding the manner in which the model structures its output. Furthermore, the machine learning model may be instructed via the prompt to score the generated output according to a set of scoring criteria. The machine learning model may finally be instructed via the prompt to provide the output only when a calculated score, based on the scoring of the generated output, exceeds a threshold value. For example, an output may not be provided (e.g., displayed to a user, sent to a software application, or the like) if it does not meet a specified level of accuracy, completeness, or consistency, among other factors. Thus, techniques described herein may include built-in techniques for ensuring that automatically generated outputs meet one or more conditions related to accuracy or quality prior to being displayed or used in further processing.

According to certain embodiments, an action may be performed in a software application based on the output. For example, actions may include displaying the output via a user interface, sending the output to one or more elements of a software application, or a combination thereof.

Embodiments of the present disclosure provide numerous technical and practical effects and benefits. Current language processing machine learning models may generate inaccurate and/or inconsistent outputs, especially when tasked with processing complex input queries. Furthermore, existing techniques for ensuring accuracy and consistency in model outputs may involve manual review and may be limited to specific applications. The result of such existing techniques is increased computational and energy costs due to generating, checking, and potentially re-generating the outputs. The present disclosure solves these technical problems. Techniques described herein ensure accurate and consistent results by using delineated sections in a prompt to guide the machine learning model to produce the final output according to target conditions in addition to performing built-in checks, such as automatically scoring potential outputs, so that only a correct output is provided to a user or used in further processing. For example, the machine learning model may be provided with inputs to process, instructions to follow, checklists to perform, and templates after which to model the corresponding outputs in a particular structured, relational format that ensures consistent, accurate, and efficient processing by the model. Continuing the example, the machine learning model may also verify that the output meets the aforementioned criteria and take action based on the verification. Therefore, the machine learning model generates more accurate and consistent results through automatic verification (i.e., before outputting those results), while conserving computing resources that would otherwise be required to reproduce an alternative output or to further process and/or correct inaccurate outputs, resulting in improved efficiency.

### Example Workflows Related to Structuring Prompt Frameworks in Language Processing Machine Learning Models

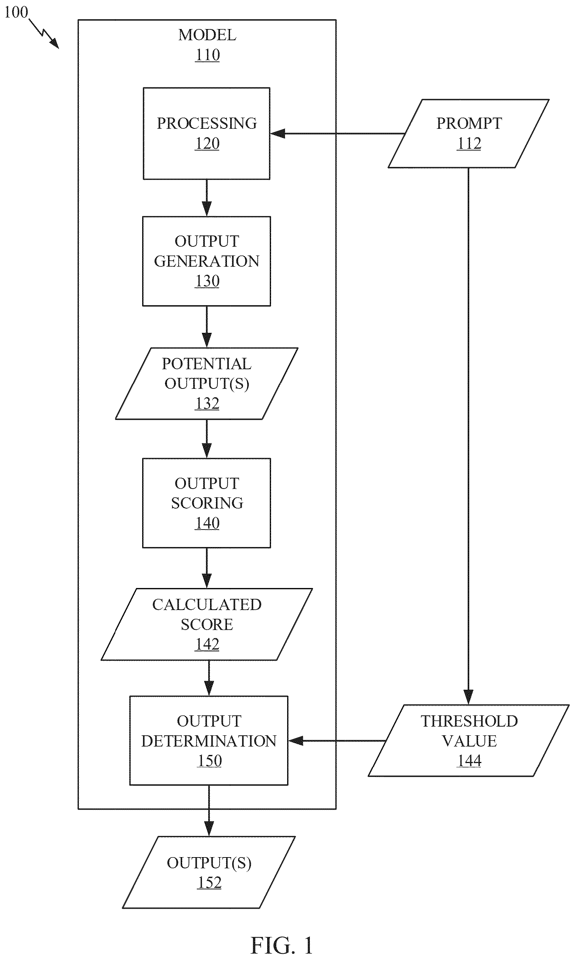

**FIG. 1** depicts an example workflow 100 related to structuring prompt frameworks in language processing machine learning models.

A model 110 may comprise a machine learning model. In a particular example, model 110 is a language processing machine learning model such as a large language model (LLM). For example, model 110 may have been trained on a large training data set in order to process natural language inputs and generate natural language content in response. In some embodiments, model 110 is a generative pre-trained transformer (GPT) model that has been trained on a large set of training data (e.g., across a plurality of domains), and is capable as a result of such training to perform a wide variety of language-related tasks in response to natural language prompts. In some embodiments, model 110 has been fine-tuned for one or more particular domains, such as for use with a particular software application or for a specific purpose, while in other embodiments model 110 has been trained in a more general fashion and has not been fine-tuned in such a manner. Model 110 may have a large number of tunable parameters, which are iteratively adjusted during a model training process based on training data. In alternative embodiments, model 110 may be another type of machine learning model that is capable of generating content. For example, model 110 may be a generative adversarial network (GAN), an autoencoder model, an autoregressive model, a diffusion model, a Bayesian network, a hidden Markov model, and/or the like.

The model 110 may receive a prompt 112. The prompt 112 may contain natural language, code language, or a combination thereof. The prompt 112 may further contain one or more sections to be processed by the model 110 during processing 120. A potential output(s) 132 is produced by output generation 130, according to the one or more sections contained in the prompt 112. Before being provided as a final output, the potential output(s) 132 may be passed to output scoring 140 which produces a calculated score 142. The calculated score 142 may be based on one or more factors, each of which is assigned a point value, relating to accuracy, completeness, consistency, or the like. A higher score may be assigned to potential output(s) 132 that, for example, contain a single assert field (e.g., if the output(s) comprise unit tests), contain correct tags, and/or are in the same format as an output template, while a lower score may be assigned to those that do not meet one or more of those conditions.

During output determination 150, the calculated score 142 is compared to a threshold value 144 to determine whether to provide the potential output(s) 132 as output(s) 152. For example, if the calculated score 142 is less than the threshold value 144, the potential output(s) 132 may not be provided as output(s) 152 by the model 110 since the potential output(s) 132 did not meet one or more quality criteria (e.g., potential output(s) 132 did not meet a specified level of accuracy and/or consistency regarding format, content, and/or the like). In addition to not providing the potential output(s) 132 as an output(s) 152, the model 110 may revise the potential output(s) 132 to generate an alternative output(s) whose calculated score 142 exceeds the threshold value 144. When the calculated score 142 is greater than the threshold value 144, the model 110 may provide an output(s) 152. For example, output(s) 152 may be displayed via a user interface, sent to one or more elements of a software application (e.g., for further processing), or both.

In certain embodiments, potential output(s) 132 and output(s) 152 may comprise one or more unit tests. The model 110 may be instructed, via the prompt 112, to leave a specified assert field of each unit test of the one or more unit tests blank. In one example, the specified assert field that is left blank may refer to a credit amount for a user and may be filled in by a tax expert based on user tax data compiled by a financial services company.

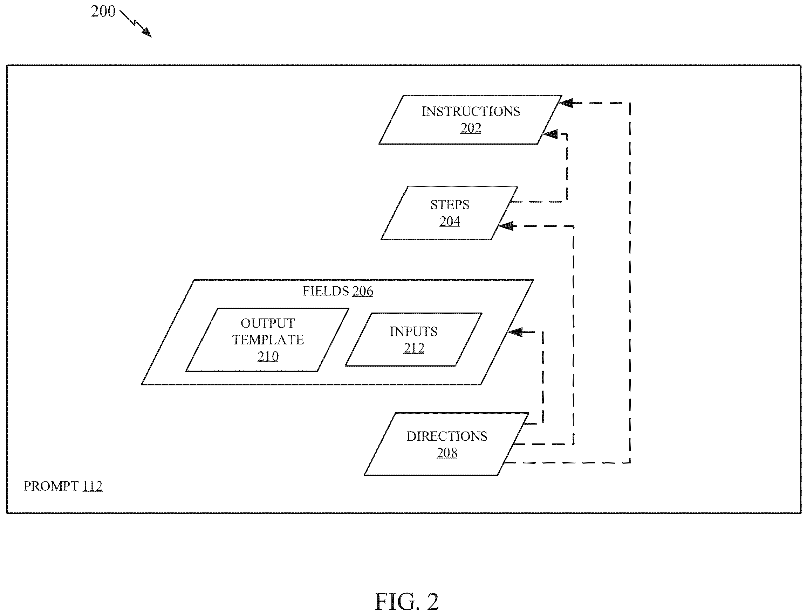

**FIG. 2** is a block diagram 200 illustrating an example related to structuring prompt frameworks in language processing machine learning models. For example, block diagram 200 depicts one or more example sections defining steps that may be performed by the model 110 in **FIG. 1****.**

Prompt 112 may contain one or more sections each containing a series of commands, templates, variables, or a combination thereof, by which the model 110 may process inputs 212, generate potential output(s) 132, score potential output(s) 132, and/or provide output(s) 152. The commands, for example, may be written in a natural language. Each section of the one or more sections contained in the prompt 112 may be delineated with tags. For example, the tags may be extensible markup language (XML) or universal markup language (UML) tags and/or may be structured similarly to such tags (e.g., having beginning and ending tags for each section that are delineated by one or more particular characters such as < and >). In some embodiments, only when the next tag is read will the model 110 proceed to that section of the prompt 112. Each tag may trigger the start of its respective section and/or denote the end of that section. The tags ensure that all conditions of each section are satisfied before proceeding any further, which results in a clear structure for the model 110 to follow. This allows for increased accuracy and efficiency and the ability to process a wide range of queries, from very simple to very complex.

Instructions 202 may be a first section of the one or more sections contained in the prompt 112. For example, instructions 202 may contain natural language commands for handling inputs and maintaining consistency with provided templates. Instructions 202 may be associated with a highest level of generality compared to the other sections contained in the prompt 112. Sample commands with corresponding tags are provided below:

```
             <Instructions>
             - Inputs are the fields that are used as part of the calculation or
             condition of the scenario.
             - Use only all the given input fields in the template in the same order
             for each test case for the inputs.
             - Asserts are fields that are being written in. Your inputs and asserts
             MUST be from the provided starter template.
             - You MUST NOT create additional input fields or asserts that are
             not in the starter template.
             </Instructions>
```

Steps 204 may be a second section of the one or more sections contained in the prompt 112. For example, steps 204 may contain natural language commands for generating the output, including identifying variables and reviewing the template(s) provided in the prompt 112 (e.g., in fields 206). Steps 204 may be associated with a lower level of generality compared to instructions 202 and may contain a reference to instructions 202. Sample commands with corresponding tags are provided below:

```
             <Important_steps>
             - Carefully review the starter unit test template and identify the ONE
             assert in the template.... You must not create test scenarios for any
             other variables.
             - Carefully review the code section and identify all the ways the
             ONE assert variable can be written in, these are your test cases.
             - Your test cases must cover both the positive and negative tests of
             each condition related to the ONE assert.
             - For the positive and negative tests use input values that are close
             to real actual values in the test cases.
             - Follow the format of the starter unit test template and enrich it with
             all test case scenarios.
             - Make sure to use the same variable names for the inputs and asserts
             from the starter template for the test cases.
             - Make sure the input values fields are in the same format as in the
             template.
             </Important_steps>
```

Fields 206 may be a third section of the one or more sections contained in the prompt 112. For example, fields 206 may contain an output template, input fields, asserts fields, code, and/o any other context required for generating the output(s) 152. The output template 210 may provide the model 110 with the correct format in which to provide the output(s) 152. Inputs 212 contains all input fields that the model 110 must use to generate the output(s) 152.

Directions 208 may be a fourth section of the one or more sections contained in the prompt 112. In some embodiments, directions 208 may be referred to as an "always do" section, as it specifies things that the model is instructed to always do. For example, directions 208 may contain natural language commands to ensure all actions are performed by the model 110 and all conditions are met for the output(s) 152, including that the output(s) 152 are in the correct format. Directions 208 also may contain references to the other three sections described herein, such that the model 110 must process each of those sections and complete any tasks therein before it can provide an output, ensuring accuracy and completeness. Sample commands with corresponding tags are provided below:

```
             <ALWAYS_DO>
              1. Read the given <Instructions> step by step.
             2. Understand all the <Important_steps>.
             3. Provide the output by enriching the <starter_template> template
             following the <Instructions> given.
             5. Do not add the assert values.
             8. Must provide the output within each section in the same format
             as starter template.
             </ALWAYS_DO>
```

Techniques described herein may be implemented with more or fewer sections than those shown and described with respect to **FIG. 2****,** and the sections may contain more or fewer commands, fields, or the like than shown and described with respect to **FIG. 2****.**

### Example Operations Related to Structuring Prompt Frameworks in Language Processing Machine Learning Models

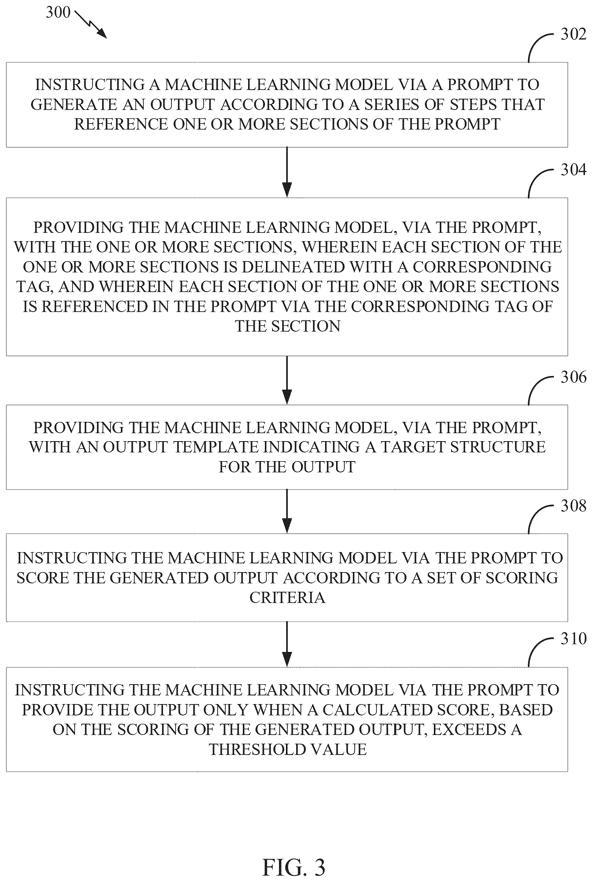

**FIG. 3** depicts example operations 300 related to structuring prompt frameworks in language processing machine learning models. For example, operations 300 may be performed by one or more of the components described with respect to **FIG. 1** and/or **FIG. 2****.**

Operations 300 begin at step 302 with instructing a machine learning model via a prompt to generate an output according to a series of steps that reference one or more sections of the prompt. In certain embodiments, the output comprises one or more unit tests related to a software application. According to some embodiments, the instructing the machine learning model via the prompt to generate the output further comprises instructing the machine learning model via the prompt to leave a specified assert field of each unit test of the one or more unit tests blank.

Operations 300 continue at step 304 with providing the machine learning model, via the prompt, with the one or more sections, wherein each section of the one or more sections is delineated with a corresponding tag, and wherein each section of the one or more sections is referenced in the prompt via the corresponding tag of the section. In some embodiments, each section of the one or more sections comprises additional details of at least one step in the series of steps. According to certain embodiments, the one or more sections comprise a first section comprising a set of instructions associated with a higher level of generality than a level of generality associated with a second section of the one or more sections, and wherein the second section comprises a reference to the first section. Some embodiments provide that the providing the machine learning model, via the prompt, with the one or more sections further comprises providing the machine learning model, via the prompt, with a third section of the one or more sections that includes one or more of: the output template; contextual information related to generating the output; or a set of inputs, wherein the set of inputs corresponds to data of a software application. In certain embodiments, the one or more sections further comprise a fourth section that specifies the series of steps and further comprises references to the first section, the second section, and the third section.

Operations 300 continue at step 306 with providing the machine learning model, via the prompt, with an output template indicating a target structure for the output.

Operations 300 continue at step 308 with instructing the machine learning model via the prompt to score the generated output according to a set of scoring criteria.

Operations 300 continue at step 310 with instructing the machine learning model via the prompt to provide the output only when a calculated score, based on the scoring of the generated output, exceeds a threshold value.

In certain embodiments, the method further comprises receiving the output from the machine learning model in response to the prompt and performing an action based on the output, wherein the performing of the action comprises one or more of: displaying the output via a user interface or sending the output to one or more elements of a software application.

### Example of a Processing System for Structuring Prompt Frameworks in Language Processing Machine Learning Models

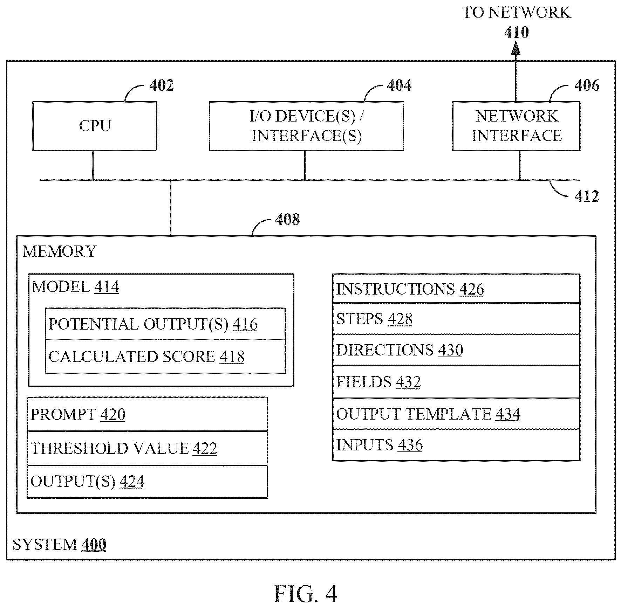

**FIG. 4** illustrates an example system 400 with which embodiments of the present disclosure may be implemented. For example, system 400 may be configured to perform operations 300 of **FIG. 3** and/or to implement one or more components as in **FIG. 1** or **FIG. 2****.**

System 400 includes a central processing unit (CPU) 402, one or more I/O device interfaces that may allow for the connection of various I/O devices 404 (e.g., keyboards, displays, mouse devices, pen input, etc.) to the system 400, network interface 406, a memory 408, and an interconnect 412. It is contemplated that one or more components of system 400 may be located remotely and accessed via a network 410. It is further contemplated that one or more components of system 400 may comprise physical components or virtualized components.

CPU 402 may retrieve and execute programming instructions stored in the memory 408. Similarly, the CPU 402 may retrieve and store application data residing in the memory 408. The interconnect 412 transmits programming instructions and application data, among the CPU 402, I/O device interface 404, network interface 406, and memory 408. CPU 402 is included to be representative of a single CPU, multiple CPUs, a single CPU having multiple processing cores, and other arrangements.

Additionally, the memory 408 is included to be representative of a random access memory or the like. In some embodiments, memory 408 may comprise a disk drive, solid state drive, or a collection of storage devices distributed across multiple storage systems. Although shown as a single unit, the memory 408 may be a combination of fixed and/or removable storage devices, such as fixed disc drives, removable memory cards or optical storage, network attached storage (NAS), or a storage area-network (SAN).

As shown, memory 408 includes model 414, potential output(s) 416, calculated score 418, prompt 420, threshold value 422, and output(s) 424. Model 414 may be representative of model 110 of **FIG. 1****.** Potential output(s) 416 may be representative of potential output(s) 132 of **FIG. 1****.** Calculated score 418 may be representative of calculated score 142 of **FIG. 1****.** Prompt 420 may be representative of prompt 112 of **FIG. 1****.** Threshold value 422 may be representative of threshold value 144 of **FIG. 1****.** Output(s) 424 may be representative of output(s) 152 of **FIG. 1****.**

Memory 408 further comprises instructions 426 which may correspond to instructions 202 of **FIG. 2****.** Memory 408 further comprises steps 428, which may correspond to steps 204 of **FIG. 2****.** Memory 408 further comprises directions 430, which may correspond to directions 208 of **FIG. 2****.** Memory 408 further comprises fields 432, which may correspond to fields 206 of **FIG. 2****.** Memory 408 further comprises output template 434, which may correspond to output template 210 of **FIG. 2****.** Memory 408 further comprises inputs 436, which may correspond to inputs 212 of **FIG. 2****.** It is noted that in some embodiments, system 400 may interact with one or more external components, such as via network 410, in order to retrieve data and/or perform operations. Furthermore, techniques described herein may be implemented via more or fewer components than those shown and described with respect to **FIG. 4****,** such as on one or more computing systems.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a c c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

Therefore, from one perspective, there have been described approaches for structuring prompt frameworks in machine learning models. Embodiments include instructing a machine learning model via a prompt to generate an output according to a series of steps that reference one or more sections of the prompt. Embodiments include providing the machine learning model, via the prompt, with the one or more sections delineated with corresponding tags, each section of the one or more sections being referenced in the prompt via a corresponding tag. Embodiments include providing the machine learning model, via the prompt, with an output template indicating a target structure for the output and instructing the machine learning model to score the generated output according to a set of scoring criteria. Embodiments include instructing the machine learning model via the prompt to provide the output only when a calculated score, based on the scoring of the generated output, exceeds a threshold value.

Further examples of feature combinations taught by the present disclosure are set out in the following numbered clauses.

Clause 1. A method for structuring prompt frameworks in language processing machine learning models, comprising: instructing a machine learning model via a prompt to generate an output according to a series of steps that reference one or more sections of the prompt; providing the machine learning model, via the prompt, with the one or more sections, wherein each section of the one or more sections is delineated with a corresponding tag, and wherein each section of the one or more sections is referenced in the prompt via the corresponding tag of the section; providing the machine learning model, via the prompt, with an output template indicating a target structure for the output; instructing the machine learning model via the prompt to score the generated output according to a set of scoring criteria; and instructing the machine learning model via the prompt to provide the output only when a calculated score, based on the scoring of the generated output, exceeds a threshold value.

Clause 2. The method of clause 1, wherein each section of the one or more sections comprises additional details of at least one step in the series of steps.

Clause 3. The method of clause 1 or 2, wherein the one or more sections comprise a first section comprising a set of instructions associated with a higher level of generality than a level of generality associated with a second section of the one or more sections, and wherein the second section comprises a reference to the first section.

Clause 4. The method of clause 3, further comprising providing the machine learning model, via the prompt, with a third section of the one or more sections that includes one or more of: the output template; contextual information related to generating the output; or a set of inputs, wherein the set of inputs corresponds to data of a software application.

Clause 5. The method of clause 4, wherein the one or more sections further comprise a fourth section that specifies the series of steps and further comprises references to the first section, the second section, and the third section.

Clause 6. The method of any preceding clause, wherein the output comprises one or more unit tests related to a software application.

Clause 7. The method of clause 6, further comprising instructing the machine learning model via the prompt to leave a specified assert field of each unit test of the one or more unit tests blank.

Clause 8. The method of any preceding clause, further comprising: receiving the output from the machine learning model in response to the prompt; and performing an action based on the output, wherein the performing of the action comprises one or more of: displaying the output via a user interface; or sending the output to one or more elements of a software application.

Clause 9. A system for structuring prompt frameworks in language processing machine learning models, comprising: one or more processors; and a memory comprising instructions that, when executed by the one or more processors, cause the system to: instruct a machine learning model via a prompt to generate an output according to a series of steps that reference one or more sections of the prompt; provide the machine learning model, via the prompt, with the one or more sections, wherein each section of the one or more sections is delineated with a corresponding tag, and wherein each section of the one or more sections is referenced in the prompt via the corresponding tag of the section; provide the machine learning model, via the prompt, with an output template indicating a target structure for the output; instruct the machine learning model via the prompt to score the generated output according to a set of scoring criteria; and instruct the machine learning model via the prompt to provide the output only when a calculated score, based on the scoring of the generated output, exceeds a threshold value.

Clause 10. The system of clause 9, wherein each section of the one or more sections comprises additional details of at least one step in the series of steps.

Clause 11. The system of clause 9 or 10, wherein the one or more sections comprise a first section comprising a set of instructions associated with a higher level of generality than a level of generality associated with a second section of the one or more sections, and wherein the second section comprises a reference to the first section.

Clause 12. The system of clause 11, wherein the instructions, when executed by the one or more processors, further cause the system to provide the machine learning model, via the prompt, with a third section of the one or more sections that includes one or more of: the output template; contextual information related to generating the output; or a set of inputs, wherein the set of inputs corresponds to data of a software application.

Clause 13. The system of clause 12, wherein the one or more sections further comprise a fourth section that specifies the series of steps and further comprises references to the first section, the second section, and the third section.

Clause 14. The system of any of clauses 9 to 13, wherein the output comprises one or more unit tests related to a software application.

Clause 15. /The system of clause 14, wherein the instructions, when executed by the one or more processors, further cause the system to instruct the machine learning model via the prompt to leave a specified assert field of each unit test of the one or more unit tests blank.

Clause 16. The system of any of clauses 9 to 14, wherein the instructions, when executed by the one or more processors, further cause the system to: receive the output from the machine learning model in response to the prompt; and perform an action based on the output, wherein the performing of the action comprises one or more of: displaying the output via a user interface; or sending the output to one or more elements of a software application.

Clause 17. A computer readable medium comprising instructions that, when executed by one or more processors of a computing system, cause the computing system to: instruct a machine learning model via a prompt to generate an output according to a series of steps that reference one or more sections of the prompt; provide the machine learning model, via the prompt, with the one or more sections, wherein each section of the one or more sections is delineated with a corresponding tag, and wherein each section of the one or more sections is referenced in the prompt via the corresponding tag of the section; provide the machine learning model, via the prompt, with an output template indicating a target structure for the output; instruct the machine learning model via the prompt to score the generated output according to a set of scoring criteria; and instruct the machine learning model via the prompt to provide the output only when a calculated score, based on the scoring of the generated output, exceeds a threshold value.

Clause 18. The computer readable medium of clause 17, wherein each section of the one or more sections comprises additional details of at least one step in the series of steps.

Clause 19. The computer readable medium of clause 17 or 18, wherein the one or more sections comprise a first section comprising a set of instructions associated with a higher level of generality than a level of generality associated with a second section of the one or more sections, and wherein the second section comprises a reference to the first section.

Clause 20. The computer readable medium of clause 19, wherein the instructions, when executed by the one or more processors, further cause the computing system to provide the machine learning model, via the prompt, with a third section of the one or more sections that includes one or more of: the output template; contextual information related to generating the output; or a set of inputs, wherein the set of inputs corresponds to data of a software application.

The following claims are not intended to be limited to the embodiments shown herein, but are to be accorded the full scope consistent with the language of the claims per the provisions of Article 69 EPC and the protocol thereto. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method for structuring prompt frameworks in language processing machine learning models, comprising:
instructing a machine learning model via a prompt to generate an output according to a series of steps that reference one or more sections of the prompt;
providing the machine learning model, via the prompt, with the one or more sections, wherein each section of the one or more sections is delineated with a corresponding tag, and wherein each section of the one or more sections is referenced in the prompt via the corresponding tag of the section;
providing the machine learning model, via the prompt, with an output template indicating a target structure for the output;
instructing the machine learning model via the prompt to score the generated output according to a set of scoring criteria; and
instructing the machine learning model via the prompt to provide the output only when a calculated score, based on the scoring of the generated output, exceeds a threshold value.

2. The method of Claim 1, wherein each section of the one or more sections comprises additional details of at least one step in the series of steps.

3. The method of Claim 1 or 2, wherein the one or more sections comprise a first section comprising a set of instructions associated with a higher level of generality than a level of generality associated with a second section of the one or more sections, and wherein the second section comprises a reference to the first section.

4. The method of Claim 3, further comprising providing the machine learning model, via the prompt, with a third section of the one or more sections that includes one or more of:
the output template;
contextual information related to generating the output; or
a set of inputs, wherein the set of inputs corresponds to data of a software application.

5. The method of Claim 4, wherein the one or more sections further comprise a fourth section that specifies the series of steps and further comprises references to the first section, the second section, and the third section.

6. The method of any preceding Claim, wherein the output comprises one or more unit tests related to a software application.

7. The method of Claim 6, further comprising instructing the machine learning model via the prompt to leave a specified assert field of each unit test of the one or more unit tests blank.

8. The method of any preceding Claim, further comprising:
receiving the output from the machine learning model in response to the prompt; and performing an action based on the output, wherein the performing of the action comprises one or more of:
displaying the output via a user interface; or
sending the output to one or more elements of a software application.

9. A system for structuring prompt frameworks in language processing machine learning models, comprising:
one or more processors; and
a memory comprising instructions that, when executed by the one or more processors, cause the system to:
instruct a machine learning model via a prompt to generate an output according to a series of steps that reference one or more sections of the prompt;
provide the machine learning model, via the prompt, with the one or more sections, wherein each section of the one or more sections is delineated with a corresponding tag, and wherein each section of the one or more sections is referenced in the prompt via the corresponding tag of the section;
provide the machine learning model, via the prompt, with an output template indicating a target structure for the output;
instruct the machine learning model via the prompt to score the generated output according to a set of scoring criteria; and
instruct the machine learning model via the prompt to provide the output only when a calculated score, based on the scoring of the generated output, exceeds a threshold value.

10. The system of Claim 9, wherein each section of the one or more sections comprises additional details of at least one step in the series of steps.

11. The system of Claim 9 or 10, wherein the one or more sections comprise a first section comprising a set of instructions associated with a higher level of generality than a level of generality associated with a second section of the one or more sections, and wherein the second section comprises a reference to the first section.

12. The system of Claim 11, wherein the instructions, when executed by the one or more processors, further cause the system to provide the machine learning model, via the prompt, with a third section of the one or more sections that includes one or more of:
the output template;
contextual information related to generating the output; or
a set of inputs, wherein the set of inputs corresponds to data of a software application.

13. The system of Claim 12, wherein the one or more sections further comprise a fourth section that specifies the series of steps and further comprises references to the first section, the second section, and the third section.

14. The system of any of Claims 9 to 13, wherein the output comprises one or more unit tests related to a software application.

15. A computer readable medium comprising instructions that, when executed by one or more processors of a computing system, cause the computing system to carry out the method of any of claims 1 to 9.
